# EUROPEAN PATENT APPLICATION

(11) **EP 1 099 935 A1**
(43) Date of publication of application: **16.05.2001**
(21) Application number: 00309713.6
(22) Date of filing: 02.11.2000
(51) Int. Cl.: G01D 5/245, G01D 5/244

(54) **Apparatus for absolute position measurement**

(30) Priority: 11.11.1999 GB 9926571
(71) Applicant: RENISHAW plc, Wotton-Under-Edge Gloucestershire GL12 8JR (GB)
(72) Inventor: Howley, Colin Keith, Stonehouse, Gloucestershire GL10 2ES (GB)
(74) Representative: Jackson, John Timothy

(57) **Abstract**

A system for measuring the position of a first member relative to a second member, comprising a scale (1) with both incremental and absolute reference markings attached to the second member and a reading apparatus (2) attached to the first member wherein the reading apparatus measures incremental movement (4) from the incremental markings and sends the output to a counter (6) and also measures the absolute position (3) from the absolute reference markings. The counter position at a given time is stored until the absolute position also measured at that given time has been calculated. The counter position and absolute position are then compared (7) for the given time.

## Description

The present invention relates to the measurement of the absolute position of an object.

A single-axis incremental position encoder is a device for measuring the relative movement of two objects along one axis. Typically, a scale is attached to one of the objects and a read head to the other, the scale having regularly spaced identical markings on it. The read head contains a light source which illuminates the scale and a sensor or sensors for detecting the scale markings. In the simplest case, the read head provides outputs which allow the markings to be counted to keep track of position. Usually, the read head provides some electronic interpolation such that the effective resolution is higher than would be achieved by direct counting of the markings on the scale. In some cases, the outputs are analogue (often two sinusoidal in quadrature) to allow electronics external to the read head to perform the interpolation. As such, an incremental encoder has no knowledge of the read head's position along the scale. However, a reference mark may be provided on or alongside the scale for this purpose. A sensor in the read head can detect the reference mark and this defines a datum position. An example of an incremental encoder using reference marks to define a zero position is disclosed in DE 198 56 708.

Dual-axis incremental position encoders also exist. In the simplest case, these include two read heads mounted together at right angles to each other, and a scale with periodicity in two orthogonal directions, each read head measuring incremental movement in a respective one of the two directions. In other cases, the two read heads are combined together. Dual axis incremental encoders work in the same way as their single-axis counterparts, but typically produce two separate sets of outputs corresponding to the two axes of movement. These encoders may also incorporate reference mark detectors.

The read head of a single axis absolute encoder typically runs up and down a scale with data written on it, often as binary bits. By reading these bits, either with one detector as the read head passes over the scale, or simultaneously with several detectors, the read head can determine its absolute position. This position is typically relayed from the read head to a control system by means of a serial interface.

Hybrid incremental-absolute single-axis position encoders also exist. As it is possible to make incremental encoders with finer resolution than absolute encoders, many absolute encoders also incorporate an incremental channel. The absolute channel gives absolute position accurate to (at most) one period of the incremental channel, and interpolation of the incremental channel can give absolute position within the period of the incremental channel to the desired fine resolution. Combined together, the two systems work side by side to give absolute position to the fine resolution.

Encoders combining an absolute channel and an incremental channel in this manner are disclosed in W098/07124 and EP 1010967.

Current absolute encoders usually fall into one of two basic types:-
1. Those which use a scale with multiple parallel tracks and
2. Those which use a scale with a single coded track.

They are read by a read head with one or more detectors. The multiple parallel track variants employ detectors that scan all tracks at once and in any one position can output a binary position code with very little processing. The single track variants may require considerable processing to derive actual position - for example by using a look-up table or by calculation.

When envisaging an absolute encoder using a single track, it is evident that high speed operation may prove troublesome due to three inherent mechanisms:-
1. The problem of the large number of photodetectors required (in an optical embodiment) may best be addressed by using a charge-coupled detector (CCD) line sensor which may be slow and whose output needs to be read sequentially.
2. The codes read do not give position directly but need processing - look-up tables accessed or pseudo-random number sequences generated and compared, error detecting, possibly error correcting - assuming sufficient redundancy is built into the system - all of which either takes considerable time or heavy and expensive processing power.
3. At any moment in time, the absolute code may not be readable because of contamination on the scale or other adverse conditions.

According to the present invention, there is provided a system for measuring displacement between first and second members comprising:
at least one scale attached to the first member;
a reading apparatus attached to the second member;
absolute position measuring means in the reading apparatus to measure the absolute position of the first or second member relative to the other member;
incremental position measuring means in the reading apparatus to measure incremental relative movement between the first and second members;
counting means to receive an output from the incremental position measuring means;
characterised in that the counting means position at a given time is stored whilst the absolute position at that given time is calculated, such that the counting means position at the given time and the absolute position at the given time may be compared.

Preferably the absolute position measurement means is adapted to control the counting means such that the counting means provides an indication of the absolute position of the first or second member relative to the other member.

The means for providing a measure of the absolute position could control the counting means by pre-setting the latter e.g. on power-up of the system.

The means for providing a measure of the absolute position could compare its measure of the absolute position with that of the counting means, and correct the counting means or provide an error signal for example.

The present invention will now be described, by way of example, with reference to the accompanying drawings wherein:
Fig 1 is a schematic representation of an example of a system according to the present invention;
Fig 2 is an absolute and serial position comparison block diagram; and
Fig 3 is a schematic representation of the absolute and serial position comparison process.

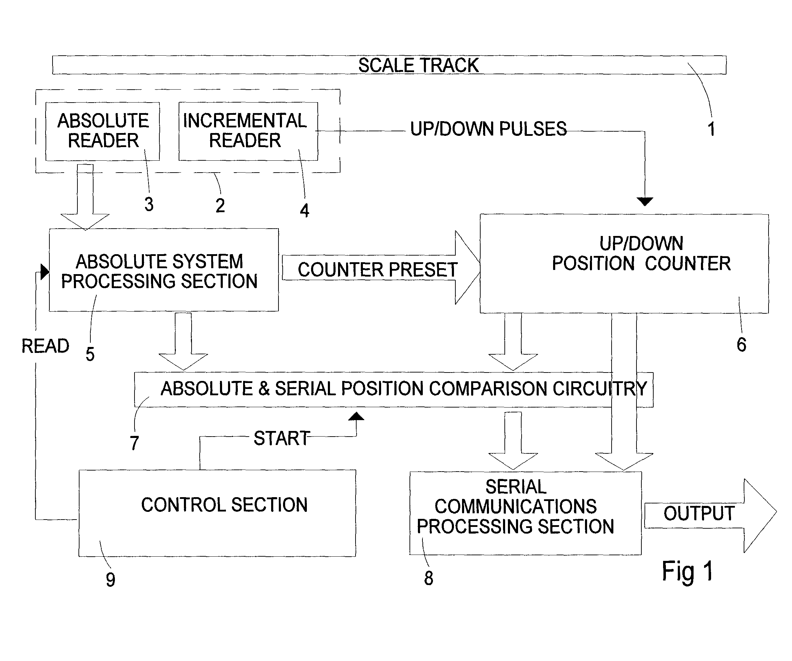

Referring to Fig 1, in an encoder, reference numeral 1 designates a scale having a track which is common for absolute and incremental position measuring or has independent tracks for absolute and incremental position measuring. In a read head 2, there are an absolute position reader 3 and an incremental position reader 4, both of which read the scale 1. The absolute position reader 3 provides an output to an absolute system processing section 5 and incremental position reader 4 provides an output in the form of up/down pulses (e.g. in quadrature format) to an up/down position counter 6, having a counter preset input provided by an output from absolute system processing section 5.

Outputs from absolute system processing section 5 and counter 6 are provided to absolute and serial position comparison circuitry 7, an output from which and another output from counter 6, being provided to a serial communications processing section 8 whose output is the system's output.

The output from the incremental position reader 4 is interpolated and counted in counter 6 (which could count the basic scale pitch only, the "within-one-cycle" interpolation data being handled separately) and this data is then subsequently used to provide an absolute position output.

On power-up, the absolute position reader 3 scans the scale 1 and processing section 5 calculates an absolute position and presets the counter 6.

When in use, at regular intervals (or when speed or contamination permits), the processing section 5 causes a sample indicating the absolute position to be provided by reading the scale to comparison circuitry 7 and causes an indication of current position from counter 6 to be stored in circuitry 7. This compares the two indications once the absolute position has been determined. If the two indications disagree, an error is flagged.

The absolute reader cannot read the absolute position directly from the scale as the data received must first be processed, which results in a time delay between receiving absolute position data and incremental position data. To overcome this a control section 9 sends a signal for the absolute system processing section 5 to read the absolute position at a given time t and simultaneously to the circuitry 7 to store the incremental position at time t.

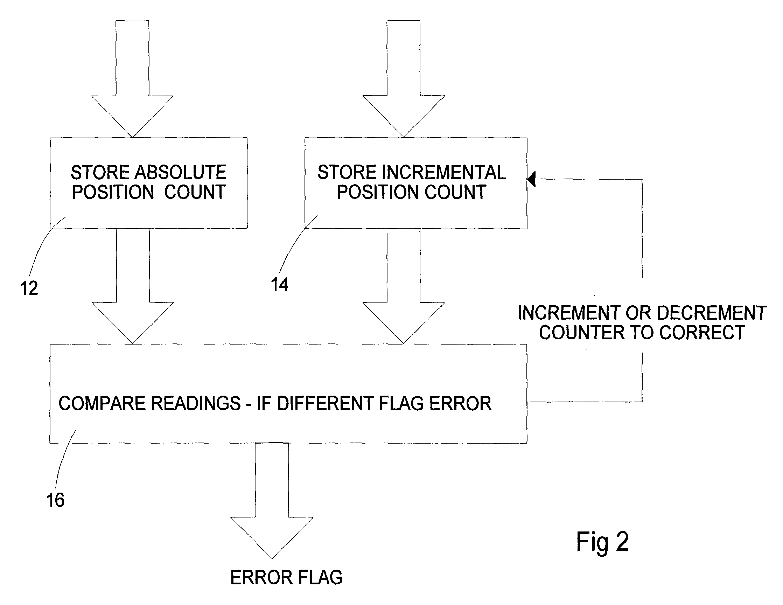

As shown in Fig 2, within circuitry 7 the incremental position count at time t is stored at 14 and the absolute position count at time t is calculated and stored at 12. After the calculation of the absolute position, the stored readings of both the incremental position and absolute position at time t are compared at 16.

If the absolute and incremental indications disagree, the system could either output an error signal, wait and confirm the error when it next samples the scale (the error could be in the decoded absolute position not in the incremental count) or "correct" the incremental system's count.

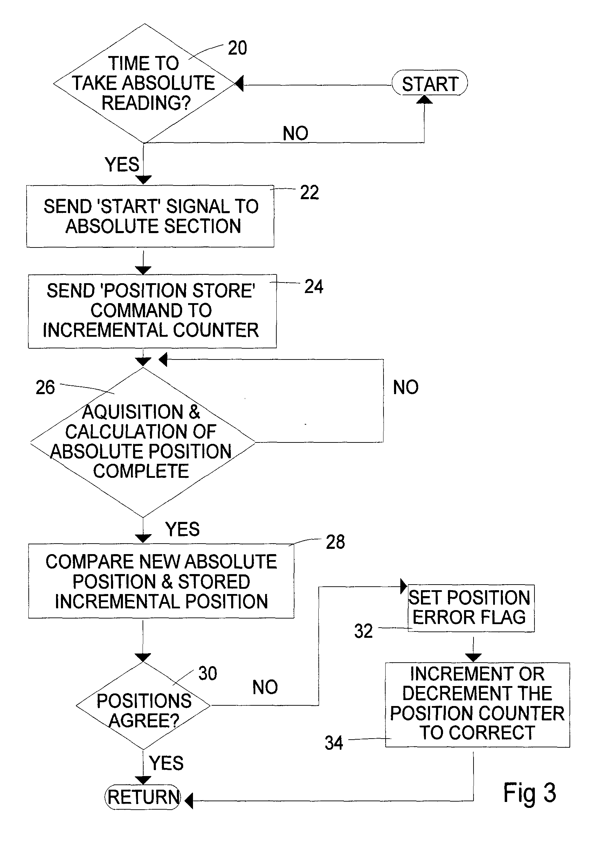

The sequence of events within the encoder is shown schematically in Fig 3. Firstly it is determined whether there is sufficient time to take an absolute reading 20 (i.e. if the speed of the readhead permits). If there is sufficient time, a "start" signal is sent to the absolute section 22 to take an absolute position reading. Simultaneously, a "position store" command is sent to the incremental counter 24 in order to store the incremental position count at the same time as the absolute position is read. Once the data required to calculate the absolute position has been acquired and the absolute position has been calculated 26, the absolute position and stored incremental position are compared 28. If the positions agree 30, the process returns to the start. If however, the positions disagree, an error is flagged 32 and the position counter is corrected 34.

The system allows the absolute position to be determined by the incremental position counter which measures position in real time. The absolute position count is much slower to calculate and so is used to zero the incremental position counter on start up and also to check the incremental position counter whenever the readhead is moving slowly enough to allow sufficient time for the absolute position to be read.

The present invention lends itself to other implementations:

Non-optical scales, e.g. magnetic or capacitive sensor types.

Any system employing an absolute measuring system that only works when stationary or at low speed such as time-of-flight systems employing sound, light or microwaves.

Two-axis encoders as well as single-axis encoders.

Any or all of the apparatus described above could use a program of a microprocessor in place of discrete circuitry.

## Claims

1. A system for measuring displacement between first and second members comprising:
at least one scale (1) attached to the first member;
a reading apparatus (2) attached to the second member;
absolute position measuring means (3) in the reading apparatus to measure the absolute position of the first or second member relative to the other member;
incremental position measuring means (4) in the reading apparatus to measure incremental relative movement between the first and second members;
counting means (6) to receive an output from the incremental position measuring means;
characterised in that the counting means position at a given time is stored whilst the absolute position at that given time is calculated, such that the counting means position at the given time and the absolute position at the given time may be compared.

2. A system for measuring displacement between first and second members according to claim 1, wherein the absolute position measurement means is adapted to control the counting means such that the counting means provides an indication of the absolute position of the first or second member relative to the other member.

3. A system for measuring displacement between first and second members according to any preceding claim, wherein the absolute position measuring means controls the counting means by pre-setting the counting means on power-up of the system.

4. A system for measuring displacement between first and second members according to any preceding claim, wherein the absolute position at the given time is compared with the stored counting means position at the given time to correct the counting means.

5. A system for measuring displacement between first and second members according to any preceding claims, wherein the absolute position at the given time is compared with the stored counting means position at the given time to provide an error signal.

6. A system for measuring displacement between first and second members according to any preceding claim, wherein the scale (1) has a track which is common for absolute and incremental position measuring.

7. A system for measuring displacement between first and second members according to any of claims 1-5, wherein the scale (1) has independent tracks for absolute and incremental position measurement.
